# EUROPEAN PATENT SPECIFICATION

(11) **EP 1 842 830 B1**
(45) Date of publication and mention of the grant of the patent: **13.10.2010**
(21) Application number: 07006526.3
(22) Date of filing: 29.03.2007
(51) Int. Cl.: C01B 3/38, B01J 8/04

(54) **Reforming apparatus and method for syngas generation**
Reformierungsvorrichtung und Verfahren zur Erzeugung von Syngas
Appareil et procédé de reformage pour la génération de gaz de synthèse

(30) Priority: 05.04.2006 US 398279
(43) Date of publication of application: 10.10.2007
(73) Proprietor: Air Products and Chemicals, Inc., Allentown, PA 18195-1501 (US)
(72) Inventor: Genkin, Eugene S., Allentown PA 18104 (US); Fogash, Kevin Boyle, Wescosville PA 18106 (US); Patel, Nitin Madhubhai, Allentown PA 18104 (US); Dimartino, Stephen Paul, Sr., Schnecksville PA 18079 (US)
(74) Representative: Westendorp | Sommer

(56) References cited:
- EP-A- 1 245 532
- WO-A-03/070629
- US-A- 4 620 940
- US-A- 5 733 514
- US-A1- 2003 198 592
- US-A1- 2003 200 699
- US-A1- 2004 063 797
- US-A1- 2005 126 076

## Description

### BACKGROUND OF THE INVENTION

The present invention relates generally to the reforming of fuels, and in particular to autothermal reforming methods and apparatus for the production of gas containing hydrogen and carbon oxides, such as methonal synthesis gas ("syngas"), including but not limited to large-scale production of syngas.

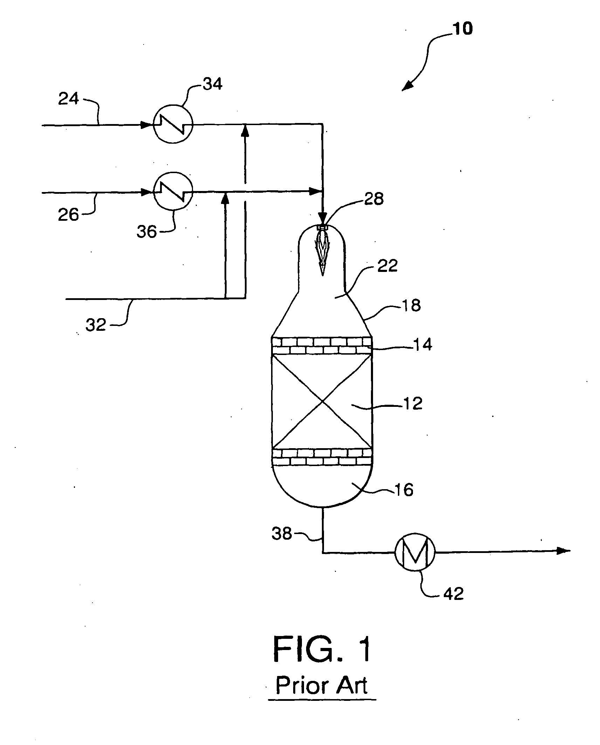

Figure 1 illustrates a typical vertical packed bed autothermal reformer 10. A hydrocarbon feed 24 is preheated in a heater 34. The preheated hydrocarbon stream may then be desulfurized in a separate unit operation (not shown). The preheated hydrocarbon stream is mixed with a portion of a steam feed 32. The preheated mixture is combined with an oxidant feed 26 within a single burner 28. The oxidant feed (usually oxygen, air, or a combination) is preheated in a heater 36. The preheated oxidant mixture is mixed with a portion of the steam feed 32 or steam could be added prior to the preheater. The steam and oxidant mixture is combined with the preheated hydrocarbon mixture within the single burner 28. A partial oxidation (POX) zone 22 is formed within the autothermal reformer vessel 18. Partial oxidation (POX) is the non-catalytic, sub-stoichmetric combustion of a hydrocarbon with an oxidant (e.g., oxygen or air) to produce CO and H2 (other products include H2O and CO2). The partially oxidized stream in the POX zone encounters a target brick system 14 and proceeds to a packed catalyst bed 12. Steam methane reforming and water gas shift reactions occur within the packed catalyst bed. An effluent gas enters a bed support arch 16 and leaves the reformer as a hot syngas stream 38. The hot syngas stream may be cooled in a process waste heat boiler 42. The syngas stream 38 may then be further processed as required.

Typical autothermal reformers are disclosed in EP0936183 A2 and U.S. Pat. No. 5,628,931 (Lednor).

There are several problems associated with the use of packed catalyst beds 12 in conventional autothermal reformers 10, such as that illustrated in Figure 1. First, the packed catalyst bed 12 can cause appreciable pressure drop, especially for increased process flows/expansions. Second, conventional autothermal reformer/secondary reformer designs are based on a high heat release (in the POX zone) from the single burner 28 and require heavy refractory protection for the vertical vessel 18. Due to high-velocity jets coming from the single burner, the catalyst bed requires a target brick system 14 for protection. Often, the failure of the target brick system results in attrition of the packed bed catalyst bed. Also, the uni-burner design forces all of the heat to be released in a single compact POX zone, which results in a high peak flame temperature. In addition, the high velocities (low residence time) in the POX zone can increase soot formation and catalyst degradation. Such aggressive operating conditions require additional steam injection, pre-reforming of heavier feeds, etc. to allow reliable operations, all of which result in higher capital and operating costs.

As discussed below, the prior art discloses various designs and improvements which alleviate some problems associated with the use of packed catalyst beds in conventional autothermal reforming. However, there remains a need for a more comprehensive solution to the problems presented.

The use of a monolith within a combustor of a gas turbine power plant to produce syngas with some fuel/oxidant staging prior to a catalyst zone is disclosed in U.S. Pat. No. 4,618,451 (Gent). The patent discloses an autothermal reformer wherein the product gas suitable for methanol synthesis is integrated with the turbine.

A device with a relatively small POX chamber followed by a reforming catalyst bed with additional oxidant and fuel insertions is disclosed in U.S. Pat. No. 5,632,787 (Boucot) and in U.S. Pat. No 5733514 (Boucot). One configuration is a traverse arrangement where a downflow autothermal reformer is followed by an upflow section and then another downflow catalyst bed followed by additional upflow and downflow sections. Additional firing can be done in later downflow sections.

EP0312754 B1 discloses a horizontal autothermal reformer, which uses a vertical catalyst section.

Other patents relating to a monolith within an autothermal reformer involve either improved injectors or catalytic partial oxidation. Catalytic partial oxidation (CPOX) involves the partial combustion of a hydrocarbon with an oxidant over a catalyst at lower temperatures than for non-catalytic partial oxidation. Hence, the CPOX reaction process is significantly different than POX.

The use of a steam reforming catalytic monolith within an autothermal reformer when used in conjunction with an injector is disclosed in U.S. Pat. No. 5,980,596 (Hershkowitz). The use of a steam reforming monolith in conjunction with a CPOX monolith for ammonia production is disclosed in U.S. Pat. No. 4,863,707 (McShea, III). A monolith secondary reformer is disclosed in EP206535 B1.

Reforming with 02 staging is disclosed in U.S. Pat. No. 6,059,995 (Topsoe), and a staged air autothermal reformer is disclosed in U.S. Patent Application Publication No. 2003/0200699 A1. Hydrocarbon CPOX with 02 staging is disclosed in EP0842894 B1.

U.S. Patent No. 6,911,193 (Allison) discloses the use of staged 02 and feedstock for a CPOX zone followed by a steam methane reforming (SMR) zone. An article in Chemical Engineering, September 2003, page 17 discloses the use of staged 02 for a mixture of CPOX and SMR catalysts.

It is desired to have an apparatus and method for reforming a fuel which eliminate the constraints that limit syngas production capacity for a single autothermal reformer, including: uni-burner design, vertical flow configuration, and the need for a transfer line.

It is further desired to have an apparatus and a method for reforming a fuel which allow an increase in syngas production from a reformer while mitigating the problem of carbon formation.

It is still further desired to have an apparatus and a method for reforming a fuel in which the requirements for process steam and oxidant are lower than such requirements for conventional autothermal reformers.

It is still further desired to have an apparatus and a method for reforming a fuel having a more uniform heat distribution than prior art autothermal reformers and providing for operation at higher equilibrium temperatures resulting in higher CO in syngas product and higher volumes of syngas.

It is still further desired to have an apparatus and a method for reforming a fuel which reduce the complexity of integration of the reformer with downstream heat recovery equipment, and eliminate the need for an expensive transfer line or the risers required in upstream tubular reformers.

It is still further desired to have an apparatus and a method for reforming a fuel having higher reforming efficiency, additional flexibility for control of the H2/CO ratio, and better reliability than conventional autothermal reformer processes.

It is still further desired to have an apparatus and a method for reforming a fuel which reduce the overall steam injection requirements needed to mitigate the risk of carbon formation.

It is still further desired to have an apparatus and a method for reforming a fuel which achieve effluent syngas temperatures higher than that of conventional autothermal reformers and processes, which results in higher carbon monoxide production (lower H2/CO ratio in the syngas).

It is still further desired to have an apparatus and a method for reforming a fuel which allow for both horizontal and upflow (vertical) configurations.

It is still further desired to have an apparatus and a method for reforming a fuel which permit the use of multiple burners (each less complex than a uni-burner) which operate at less severe conditions than the conventional uni-burner.

It is still further desired to have an apparatus and a method for reforming a fuel which eliminate the need for a target brick system such as typically used in conventional autothermal reformers.

It is still further desired to have an apparatus and a method for reforming a fuel which operate more efficiently than conventional autothermal reformers and processes, and have lower capital and operating expenses than conventional autothermal reformers and processes.

It is also desired to have an apparatus and method for reforming a fuel which afford better performance than the prior art, and which also overcome many of the difficulties and disadvantages of the prior art to provide better and more advantageous results.

### BRIEF SUMMARY OF THE INVENTION

The present invention is an apparatus and a method for reforming a fuel. There are many embodiments of the invention and many variations of those embodiments.

A first embodiment of the apparatus includes four elements. The first element is a first partial oxidation zone having at least one burner adapted to partially oxidate at least a portion of a first stage feed of the fuel with at least a portion of a first stream of an oxidant in the first partial oxidation zone, thereby forming a first partially oxidated effluent. The second element is a first catalytic zone containing a first catalyst and being in fluid communication with the first partial oxidation zone and adapted to receive at least a portion of the first partially oxidated effluent, which reacts in the first catalytic zone to form a first stage effluent. The third element is a second partial oxidation zone in fluid communication with the first catalytic zone and adapted to receive at least a portion of the first stage effluent. The second partial oxidation zone has at least one other burner adapted to partially oxidate at least a portion of a second stage feed of the fuel or an other feed of an other fuel with at least a portion of a second stream of the oxidant or an other oxidant in the second partial oxidation zone, thereby forming a second partially oxidated effluent. The fourth element is a second catalytic zone containing a second catalyst and being in fluid communication with the second partial oxidation zone and adapted to receive at least a portion of the second partially oxidated effluent, which reacts in the second catalytic zone to form a second stage effluent.

A second embodiment of the apparatus is similar to the first embodiment but includes an additional element. The additional element is a means for combining at least a portion of at least one flow of at least one moderator with at least a portion of at least one of (a) the first stage feed of the fuel, (b) the second stage feed of the fuel or the other feed of the other fuel, (c) the first stream of the oxidant, and (d) the second stream of the oxidant or the other oxidant. In a variation of this embodiment, the at least one moderator is selected from the group consisting of steam, carbon dioxide, and mixtures thereof.

A third embodiment of the apparatus is similar to the first embodiment, but includes at least one protective monolith between at least one of (a) the first partial oxidation zone and the first catalytic zone, and (b) the second partial oxidation zone and the second catalytic zone.

There are many variations of the first embodiment and the other embodiments discussed above. In one variation, at least one of the first catalyst and the second catalyst is monolithic. In another variation, the fuel is at least in part a hydrocarbon. In yet another variation, the second stage effluent is a product synthesis gas containing hydrogen and carbon monoxide.

In another variation, at least one of the first catalyst and the second catalyst is a steam reforming catalyst. In another variation, at least one of a steam methane reforming reaction and a water gas shift reaction occurs in at least one of the first catalytic zone and the second catalytic zone.

In another variation, at least one of the oxidant and the other oxidant is selected from a group consisting of oxygen, air, oxygen-depleted air, oxygen-enriched air, carbon dioxide, steam, and methanol.

In another variation, the apparatus has a longitudinal axis through each of the first partial oxidation zone, the first catalytic zone, the second partial oxidation zone, and the second catalytic zone, and the longitudinal axis is substantially horizontal.

In another variation, at least one of the first catalytic zone and the second catalytic zone is in fluid communication with a heat recovery device.

Persons skilled in the art will recognize that there are many other embodiments and variations of the apparatus of the present invention for reforming a fuel. For example, one such other embodiment includes a combination of all of the elements and limitations set forth above for the first, second, and third embodiments of the apparatus and the variations thereof discussed above.

A first embodiment of the method for reforming a fuel includes multiple steps. The first step is to provide a first stage feed of the fuel. The second step is to provide a second stage feed of the fuel or an other feed of an other fuel. The third step is to provide a first partial oxidation zone having at least one burner. The fourth step is to partially oxidate at least a portion of the first stage feed of the fuel with at least a portion of a first stream of an oxidant in the first partial oxidation zone with the at least one burner, thereby forming a first partially oxidated effluent. The fifth step is to provide a first catalytic zone containing a first catalyst and being in fluid communication with the first partial oxidation zone. The sixth step is to receive in the first catalytic zone at least a portion of the first partially oxidated effluent, which reacts in the first catalytic zone to form a first stage effluent. The seventh step is to provide a second partial oxidation zone in fluid communication with the first catalytic zone, the second partial oxidation zone having at least one other burner. The eighth step is to receive in the second partial oxidation zone at least a portion of the first stage effluent. The ninth step is to partially oxidate at least a portion of the second stage feed of the fuel or the other feed of the other fuel with at least a portion of a second stream of the oxidant or an other oxidant in the second partial oxidation zone, thereby forming a second partially oxidated effluent. The tenth step is to provide a second catalytic zone containing a second catalyst and being in fluid communication with the second partial oxidation zone. The eleventh step is to receive in the second catalytic zone at least a portion of the second partially oxidated effluent, which reacts in the second catalytic zone to form a second stage effluent.

A second embodiment of the method is similar to the first embodiment of the method, but includes two additional steps. The first additional step is to provide at least one flow of at least one moderator. The second, additional step is to combine at least a portion of the at least one flow of the at least one moderator with at least a portion of at least one of (a) the first stage feed of the fuel, (b) the second stage feed of the fuel or the other feed of the other fuel, (c) the first stream of the oxidant, and (d) the second stream of the oxidant or the other oxidant. In a variation of this embodiment, the at least one moderator is selected from the group consisting of steam, carbon dioxide, and mixtures thereof.

A third embodiment of the method is similar to the first embodiment of the method, but includes the further step of providing at least one protective monolith between at least one of (a) the first partial oxidation zone and the first catalytic zone, and (b) the second partial oxidation zone and the second catalytic zone.

There are many variations of the first embodiment and the other embodiments of the method discussed above. In one variation, at least one of the first catalyst and the second catalyst is monolithic. In another variation, the fuel is at least in part a hydrocarbon. In yet another variation, the second stage effluent is a product synthesis gas containing hydrogen and carbon monoxide.

In another variation, at least one of the first catalyst and the second catalyst is a steam reforming catalyst. In yet another variation, at least one of a steam methane reforming reaction and a water gas shift reaction occurs in at least one of the first catalytic zone and the second catalytic zone.

In another variation, at least one of the oxidant and the other oxidant is selected from the group consisting of oxygen, air, oxygen-depleted air, oxygen-enriched air, carbon dioxide, steam, and methanol.

In another variation, there is a longitudinal axis through each of the first partial oxidation zone, the first catalytic zone, the second partial oxidation zone, and the second catalytic zone, and the longitudinal axis is substantially horizontal.

In another variation, at least one of the first catalytic zone and the second catalytic zone is in fluid communication with a heat recovery device.

Persons skilled in the art will recognize that there are many other embodiments and variations of the method of the present invention for reforming a fuel. For example, one such other embodiment is a method including all of the steps and limitations set forth above for the first, second, and third embodiments of the method and the variations thereof discussed above.

### BRIEF DESCRIPTION OF THE DRAWINGS

The invention will be described by way of example with reference to the accompanying drawings, in which:

Figure 1 is a schematic diagram illustrating a conventional autothermal reformer process;

Figure 2 is a schematic diagram illustrating one embodiment of the present invention;

Figure 3 is a schematic diagram illustrating another embodiment of the present invention;

Figure 4 is a graphic illustration comparing the temperature profiles in the catalyst bed for a conventional autothermal reformer and one embodiment of a staged reformer of the present invention;

Figure 5 is a schematic diagram illustrating another embodiment of the present invention illustrating integration of a multi-stage reformer with heat recovery equipment; and

Figure 6 is a schematic diagram illustrating yet another embodiment of the present invention illustrating integration of a heat recovery device or heat exchanger with the first and second stages of a two-stage reformer of the present invention.

### DETAILED DESCRIPTION OF THE INVENTION

An autothermal reformer for the production of syngas uses both fuel staging and oxidant staging, a multi-burner design, and a catalyst that preferably is monolithic, and preferably has a horizontal flow configuration. The autothermal reformer eliminates significant constraints which limit syngas production capacity for a conventional autothermal reformer, such as: uni-burner design (limited by duty from a single burner); vertical flow configuration (limited by catalyst bed weight and the size of arch/dome support); and the need for a transfer line (to transfer syngas from the reformer to downstream equipment).

As used herein, the term "fuel" includes any fuel which may be used as a feedstock for producing syngas or other gases which contain hydrogen and carbon monoxide products. The fuel may be a liquid, gas, solid, or mixtures thereof. A single type of fuel, or multiple types of fuel, may be used. Preferably, at least one type of the fuels used is in part a hydrocarbon. For example, fuels which may be used alone or in combination include, but are not limited to, natural gas, methane, mixtures of hydrocarbons, hydrogen, and mixtures containing hydrogen and similar fuels.

As used herein, the term "oxidant" includes any gas, liquid, solid and mixtures thereof containing any form of oxygen which can act as an oxidizing agent. For example, oxidants which may be used alone or in combination include, but are not limited to, air; oxygen, oxygen-depleted air, oxygen-enriched air, carbon dioxide, steam, methanol, and similar oxidants.

The reforming of a fuel feed in multiple stages allows an increase in syngas production from the reformer, while mitigating the problem of carbon formation. In addition, the overall process steam and oxidant requirements are reduced for the process.

The staging of both the oxidant feed and the fuel feed allows a controlled heat release distribution and lowers the peak flame temperature. The less aggressive operating conditions allow the use of more active catalysts and eliminate the need for inert sections of catalyst bed and protective target bricks. In addition, the process provides greater operational and commercial flexibility.

Staging of both the oxidant feed and the fuel feed also permits the use of multiple burners instead of a complex uni-burner. In the multi-burner design, each burner operates at less severe conditions than that of the uni-burner. More aggressive operation can be accomplished as each multi-burner may be run at the uni-burner conditions. Importantly, staging of both the oxidant feed and the fuel feed increases the reformer exit temperature and produces syngas with higher CO contents and higher volume from the reformer. An increase in equilibrium exit temperature does not necessarily result in higher flame temperatures inside the reforming reactor because of the effect of staging and the multi-burner design, which also allows for a more uniform heat distribution.

A horizontal flow arrangement used in some embodiments of the present invention eliminates the need for any special support for the catalyst, and use of a monolithic catalyst (with lower pressure drop than a packed bed) eliminates most catalyst attrition problems. A staged horizontal autothermal reforming process also reduces the complexity of integration of the reformer with downstream heat recovery equipment, and eliminates the need for an expensive transfer line or the risers required in upstream tubular reformers (for the case where a secondary reformer is used). It also has higher reforming efficiency, additional flexibility for control of the H2/CO ratio, and better reliability than conventional autothermal reformer processes.

The autothermal reformer uses a steam reforming catalytic monolith instead of a conventional packed bed of steam reforming catalyst within a conventional autothermal reformer (non-catalytic partial oxidation followed by a catalyst bed). The use of a catalytic monolith in place of a conventional fixed bed catalyst has the following advantages:
- reduced pressure drop;
- higher effective surface area for the same catalyst volume;
- different packing structure substantially reduces catalyst attrition due to thermal expansion;
- no need for target refractory bricks - thus eliminating the possibility of plugging target bricks due to attrition;
- the top (inert) portion of the monolith bed organizes the flow paths for the downstream catalyst portion of the bed;
- the high thermal conductivity of the monolith allows a more uniform temperature profile within the reaction zone (compared to the packed bed) and thus a higher effective equilibrium temperature may be achieved; and
- all of the above advantages result in a better reforming efficiency.

A monolith catalyst also provides important flexibility in the design configuration of the autothermal reformer/secondary reformer for specific flowsheet conditions (horizontal and up-flow design). More importantly, it allows organized staged autothermal/secondary reforming processes.

In addition, the present invention reduces the overall steam injection requirements needed to mitigate the risk of carbon formation. Steam addition is required only to the first stage, while all downstream stages can be operated without steam injection. The first stage will produce steam that may be used to mitigate the risk of carbon formation in the latter stages.

Persons skilled in the art will recognize that other moderators besides steam may be used. For example, carbon dioxide (CO2) may be used as a moderator alone or in combination with steam or another moderator.

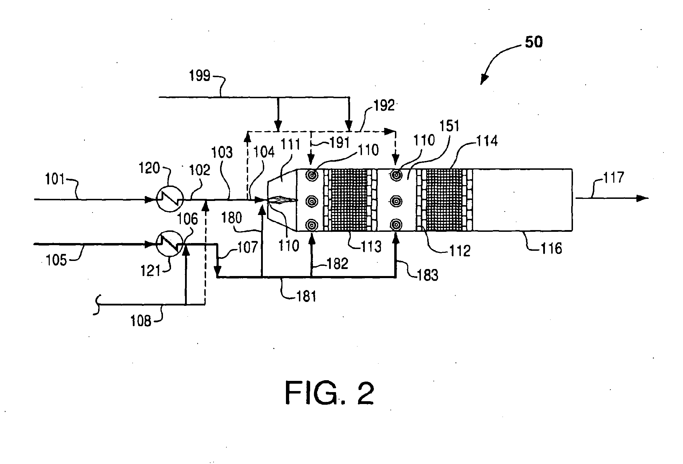

Referring to the drawings, one embodiment of the present invention involves the use of a catalyst monolith with a hydrocarbon autothermal reformer 50, as shown in Figure 2. A hydrocarbon feed 101 is preheated in a heater 120. The preheated hydrocarbon stream 102 may be mixed with a portion of steam feed 108. The steam and hydrocarbon mixture 103 may be staged to different burners 110. A portion of the preheated hydrocarbon mixture 104 is combined with a portion of the oxidant 180 within a burner 110. The oxidant feed 105 (usually oxygen, air, or a combination) is preheated in a heater 121. The preheated oxidant 106 is mixed with a portion of steam feed 108 or steam could be added prior to the preheater. The steam and oxidant mixture 107 may be staged to different burners 110. A portion of the oxidant 181 may be staged to burner zones. Oxidant stream 182 may be combined with the hydrocarbon stream 191 in the burners 110 prior to the first catalytic zone 113. The first catalytic zone 113 comprises a monolith catalyst zone. The partial combustion products within the first partial combustion zone 111 enter the first catalytic zone 113. Prior to any catalytic zone, a non-catalytically active or protective monolith 112 may be provided. Within the first catalytic zone 113, steam methane reforming and water gas shift reactions occur.

The product gas then enters the second partial oxidation zone 151 where additional burners 110 provide heat. The oxidant stream 183 may be combined with the hydrocarbon stream 192 within the burners 110 within the second partial oxidation zone 151. A moderator stream 199 of steam or another moderator (e.g., carbon dioxide) may be combined with the hydrocarbon stream 192. The partial combustion products in the second partial combustion zone 151 enter the second catalytic zone 114. Within the second catalytic zone 114, steam and methane reforming and water gas shift reactions occur. The product gas then leaves the second catalytic zone 114 and enters a process waste heat boiler 116 or other heat recovery (or heat exchange) device. The syngas product 117 may then be further processed as required.

For illustrative purposes only, only two partial oxidation and two catalytic zones with oxidant and hydrocarbon staging are shown in Figure 2. However, any number of additional catalytic zones and partial oxidation zones may be added.

Also, the hydrocarbon feed 101 may be staged to different partial oxidation zones (as shown) or may be fed preferentially to only one zone. A horizontal configuration is shown, but a vertical upflow design may be operated with the catalyst monolith. A plurality of burners may be provided within each partial oxidation zone.

Both the oxidant feed and the hydrocarbon feed are staged to at least two sections of the autothermal reactor. The catalyst monolith permits the use of multiple catalyst sections in a horizontal configuration.

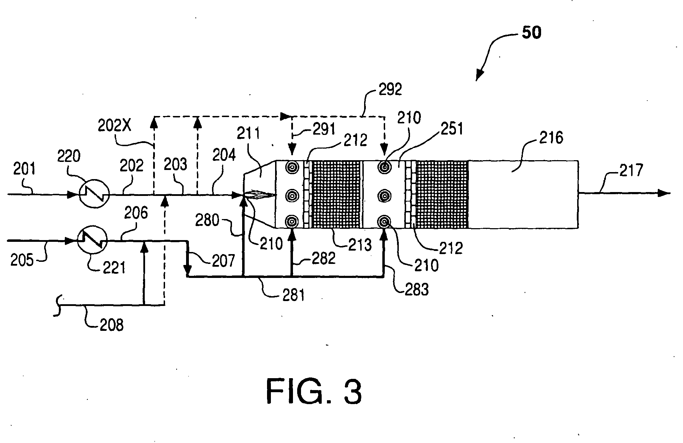

Figure 3 shows another embodiment of an autothermal reformer 50 of the present invention. The hydrocarbon feed 201 is preheated in a heater 220. The preheated hydrocarbon stream 202 may be mixed with a portion of steam feed 208. The steam and hydrocarbon mixture 203 may be staged to different burners 210. A portion of the preheated hydrocarbon mixture 204 is combined with a portion of the oxidant 280 within a burner 210. The oxidant feed 205 (usually oxygen, air, or a combination) is preheated in a heater 221. The preheated oxidant 206 is mixed with a portion of steam feed 208 or steam could be added prior to the preheater. The steam and oxidant mixture 207 may be staged to different burners 210. A portion of the oxidant 281 may be staged to burner zones. Oxidant stream 282 may be combined with the hydrocarbon stream 291 within the burners 210 prior to the first catalytic zone 213. The catalytic zone 213 comprises a monolithic catalyst zone. The partial combustion products within the first partial combustion zone 211 enter the first catalytic zone 213. Prior to any catalytic zone, a non-catalytically active or protective monolith 212 may be provided. Within the first catalytic zone 213 steam methane reforming and water gas shift reactions occur.

The product gas then enters the second partial oxidation zone 251 where additional burners 210 provide heat. The oxidant stream 283 may be combined with the hydrocarbon stream 292 within the burners 210 within the second partial oxidation zone 251. The partial combustion products within the second partial combustion zone 251 enter the second catalytic zone 214. Within the second catalytic zone 214 steam methane reforming and water gas shift reactions occur. The product gas then leaves the second catalytic zone 214 and enters a process waste heat boiler 216 or other heat recovery (or heat exchange) device. The syngas product 217 may then be further processed as required.

Additional staging of hydrocarbon is possible as a portion of the preheated hydrocarbon 202X can be staged to any of the burners. For illustrative purposes only, only two partial oxidation and two catalytic zones with oxidant and hydrocarbon staging are shown in Figure 3. However, any number of additional catalytic zones and partial oxidation zones may be added.

Also, the hydrocarbon feed 201 may be staged to different partial oxidation zones (as shown) or fed preferentially to only one zone. A horizontal configuration is shown, but a vertical upflow design may be operated with the catalyst monolith. A plurality of burners 210 may be provided within each partial oxidation zone.

Table 1 shows the typical process conditions for a conventional vertical packed bed autotermal reformer, such as that shown in Figure 1. A single burner within the conventional design limits the total firing. Thus, the maximum reported outlet temperature of a packed bed vertical autothermal reformer is approximately 1050°C (1922°- F). Higher effluent temperatures would require significantly higher temperatures in the POX zone 22 in Figure 1. Furthermore, even higher steam to carbon ratios would be needed to avoid soot formation. The staging of the combustion load within a vertical packed bed autothermal reformer is not practical because of the support arch zone 16.

**TABLE 1**

| Process Conditions For Conventional Autothermal Reformer | | |
|---|---|---|
| • | Tin/Tout | 482/1010°C (900/1850°F) |
| • | Steam/Carbon | 0.6 - 3.0 |
| • | Pressure | 20.68 bar - 31.03 bar (300 - 450 psig) |
| • | Oxygen/Carbon | 0.5 - 75 |
| • | H₂/CO | 2.0-4.0 |
| • | Catalyst | Ceramic w/ 9 wt% |
| | | Nickel |
| • | Burner | Oxygen/Fuel |

The present invention solves the problem of achieving higher effluent syngas temperatures by reducing the peak combustion load and dispersing/staging the load to different zones within the reactor. The use of a monolith catalyst facilities the staging used in the various embodiments of the present invention. The fixed structure of the monolith allows for either horizontal or upflow configurations. The horizontal configuration does not require any support arch, since the monolith is its own support. Thus, a series of POX zones and catalytic zones can be used. The multiple partial oxidation zones minimize the peak firing in any zone. Thus, the adiabatic flame temperature can be moderated by the choice of the amount of feed, oxidant, and any secondary feed to any POX zone. This permits the use of multiple burners (each less complex than a uni-burner) which operate at less severe conditions than the conventional uni-burner. Because the effective momentum is reduced in the first POX zone, a target brick system is not necessary and may be eliminated or replaced by a section of low or inactive monolith.

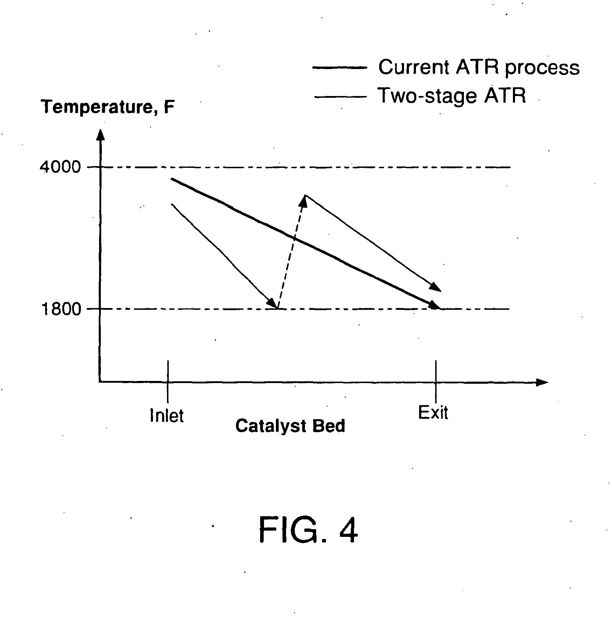

A comparison of temperature profiles within the catalyst bed for a conventional autothermal reformer ("current ATR process") and one embodiment of a staged reformer ("two-stage ATR") of the present invention is illustrated in Figure 4. As shown, the embodiment of the present invention achieves higher syngas exit temperatures while maintaining lower maximum internal temperatures in the reformer. This is achieved by the proper staging of both the oxidant and the fuel.

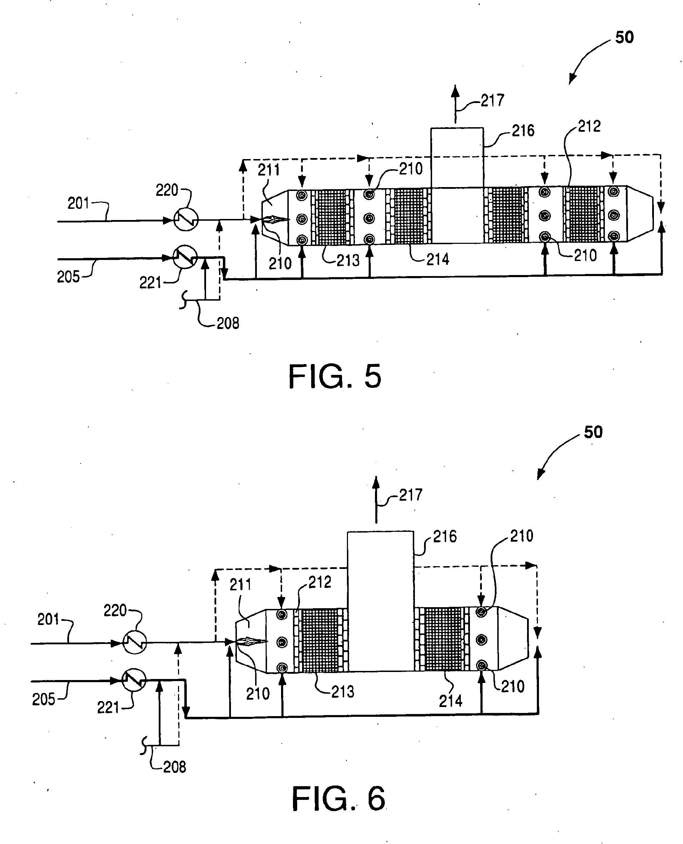

The multi-stage autothermal reformer designs for the various embodiments of the present invention allow integration with downstream heat recovery equipment within a common process unit and eliminate the need for a transfer line. For example, referring to the embodiment shown in Figure 5, the configuration of that embodiment permits a close coupling of the reformer reactor with downstream heat recovery equipment 216, which may be any process equipment. For example, a process waste heat boiler or a convective heat exchanger could reduce the syngas temperature below the carbon formation region, while recovering heat from the syngas stream.

Both symmetric and asymmetric integration designs are possible. Symmetric designs with an equal number of reforming stages on each side of a heat recovery unit have particular importance for large-scale syngas generation.

Figure 5 illustrates a symmetric integration design combining two two-stage autothermal reformers integrated with a heat recovery device 216 or heat exchanger. Another symmetric integration design is shown in Figure 6 where a heat recovery device 216 or heat exchanger is between the first and second stages of a two-stage autothermal reformer.

Table 2 below compares the operating conditions for a conventional autothermal reformer ("single-bed ATR") to the operating conditions for two embodiments ("SHARP-2 beds") of the present invention. ("ATR" is an abbreviation for authermal reformer, and "SHARP" is an abbreviation for staged horizontal autothermal reforming process.) The effluent temperature (Texit) for the conventional single-bed vertical autothermal reformer is 1050°C (1922º F). Both embodiments of the present invention supply 40% of the hydrocarbon feed to the first POX zone with the balance supplied to the second POX zone. The first embodiment of the present invention maintains the same effluent temperature as the conventional unit, 1050°C (1922º F), while in the second embodiment, the effluent temperature is increased to 1148°C (2100º F). The oxidant staging is controlled to maintain a maximum effluent temperature of 982°C (1800º F) from the first catalytic zone.

An inherent advantage of the various embodiments of the present invention is that water formed in the first catalytic zone can be used to effectively increase the steam to carbon ratio in the second catalytic zone. For the same effluent temperature (ATR vs. SHARP embodiment 1), the adiabatic flame temperature in the SHARP embodiment 1 1912°C , i.e. (3474º F) is 33°C (92º F) lower than for the ATR 1963°C, i.e. (3566º F). Also, less oxygen (9072 kg/h) (~20,000 lbs/h) and steam (~ 45359 kg/h) (~100,000 lbs/h) are needed for the process of the SHARP embodiment 1 for the same syngas production as in the conventional single-bed ATR process. The lower overall steam requirement, but higher local steam to 02, permits less CO2 import to the process.

The second embodiment of the present invention (SHARP embodiment 2) increased the reactor effluent temperature to 1148°C (2100º F), which increased the 02 requirement to approximately the same as that for the single-bed ATR case, about 181,436 kg/h (400,000 lbs/h). The higher effluent temperature reduced the CO2 import requirement by about 1089 kgmol/h (2400 lbmol/h), or by 45 %. The concomitant reduction of CO2 in the syngas greatly reduces the size of the CO2 separation equipment downstream.

**Table 2 Comparison of Operating Conditions**

| | | Single-bed | | |
|---|---|---|---|---|
| | | ATR | SHARP - 2 beds | |
| Feed split | % | | 40/60 | 40/60 |
| Texit Bed 1 | | | 982(1800) | 982 (1800) |
| Texit ATR | °C(F) | 1050 (1922) | 1050 (1922) | 1148 (2100) |
| | | | | |
| Feed | kgmol/hr (lbmol/hr) | 8,841 (19,493) | 8.747 (19,283) | 8.798 (19,396) |
| Process Steam | kg/hr (lb/hr) | 171,439 (377,958) | 126,791 (279,527) | 127,537 (281,170) |
| Oxygen | kg/hr (lb/hr) | 181,813 (400,830) | 172,652 (380,633) | 182,914 (403,257) |
| S/C Preref. | | 0.6 | 0.6 | 0.6 |
| S/C Bed 1 | | 1.0 | 1.0 | 1.0 |
| S/C Bed 2 | | | 1.283 | 1.256 |
| | | | | |
| O2/C Bed 1 | | 0.64 | 0.594 | 0.588 |
| O2/C Bed 2 | | | 0.609 | 0.665 |
| | | | | |
| Stm/O2 Bed 1 | | 1.57 | 1.68 | 1.70 |
| Stm/O2 Bed 2 | | | 2.11 | 1.89 |
| | | | | |
| Tad_in Bed 1 | °C (F) | 1963 (3566) | 1912 (3474) | 1924 (3496) |
| Tad_in Bed 2 | °C (F) | | 1891 (3436) | 2005 (3642) |
| | | | | |
| H2 to Burner 1 | % (wet) | 4.3 | 4.4 | 4.5 |
| H2 to Burner 2 | % (wet) | | 25.7 | 26.3 |
| | | | | |
| ATR Effluent | kgmol/hr (lbmol/hr) | 39279 (86596) | 35806 (78939) | 35739 (78791) |
| CO2 in effluent | kgmol/hr (lbmol/hr) | 3020 (6660) | 2273 (5012) | 1945 (4288) |
| CH4 slip | % (dry) 0.33 | | 0.51 | 0.12 |
| | | | | |
| CO2 import | kgmol/hr (lbmol/hr) | 2423 (5342) | 1817 (4005) | 1331 (2935) |
| CO2 rec. comp. | kW | 7511 | 5631 | 4127 |

Although illustrated and described herein with reference to certain specific embodiments, the present invention is nevertheless not intended to be limited to the details shown. Rather, various modifications may be made in the details within the scope and range of equivalents of the claims.

## Claims

1. An apparatus for reforming a fuel, comprising:
a first partial oxidation zone having at least one burner adapted to partially oxidate at least a portion of a first stage feed of the fuel with at least a portion of a first stream of an oxidant in the first partial oxidation zone, thereby forming a first partially oxidated effluent;
a first catalytic zone containing a first catalyst and being in fluid communication with the first partial oxidation zone and adapted to receive at least a portion of the first partially oxidated effluent, which reacts in the first catalytic zone to form a first stage effluent;
a second partial oxidation zone in fluid communication with the first catalytic zone and adapted to receive at least a portion of the first stage effluent, the second partial oxidation zone having at least one other burner adapted to partially oxidate at least a portion of a second stage feed of the fuel or an other feed of an other fuel with at least a portion of a second stream of the oxidant or an other oxidant in the second partial oxidation zone, thereby forming a second partially oxidated effluent; and
a second catalytic zone containing a second catalyst and being in fluid communication with the second partial oxidation zone and adapted to receive at least a portion of the second partially oxidated effluent, which reacts in the second catalytic zone to form a second stage effluent.

2. The apparatus of claim 1, further comprising:
a means for combining at least a portion of at least one flow of at least one moderator with at least a portion of at least one of
a) the first stage feed of the fuel,
b) the second stage feed of the fuel or the other feed of the other fuel,
c) the first stream of the oxidant, and
d) the second stream of the oxidant or the other oxidant.

3. The apparatus of claim 2, wherein the at least one moderator is selected from the group consisting of steam, carbon dioxide, and mixtures thereof.

4. The apparatus of claim 1, further comprising at least one protective monolith between at least one of
a) the first partial oxidation zone and the first catalytic zone, and
b) the second partial oxidation zone and the second catalytic zone.

5. The apparatus of claim 1, wherein at least one of the first catalyst and the second catalyst is monolithic.

6. The apparatus of claim 1, wherein the apparatus has a longitudinal axis through each of the first partial oxidation zone, the first catalytic zone, the second partial oxidation zone, and the second catalytic zone, and wherein the longitudinal axis is substantially horizontal.

7. The apparatus of claim 1, wherein at least one of the first catalytic zone and the second catalytic zone is in fluid communication with a heat recovery device.

8. The apparatus of claim 1, wherein the fuel is at least in part a hydrocarbon.

9. The apparatus of claim 1, wherein at least one of the oxidant and the other oxidant is selected from a group consisting of oxygen, air, oxygen-depleted air, oxygen-enriched air, carbon dioxide, steam, and methanol.

10. The apparatus of claim 1, wherein the second stage effluent is a product synthesis gas containing hydrogen and carbon monoxide.

11. The apparatus of claim 1, wherein at least one of the first catalyst and the second catalyst is a steam reforming catalyst.

12. The apparatus of claim 1, wherein at least one of a steam methane reforming reaction and a water gas shift reaction occurs in at least one of the first catalytic zone and the second catalytic zone.

13. The apparatus of claim 1 for reforming a hydrocarbon fuel, comprising:
a first partial oxidation zone having at least one burner adapted to partially oxidate at least a portion of a first stage feed of the hydrocarbon fuel with at least a portion of a first stream of an oxidant in the first partial oxidation zone, thereby forming a first partially oxidated effluent;
a first catalytic zone containing a first catalyst and being in fluid communication with the first partial oxidation zone and adapted to receive at least a portion of the first partially oxidated effluent, which reacts in the first catalytic zone to form a first stage effluent;
a second partial oxidation zone in fluid communication with the first catalytic zone and adapted to receive at least a portion of the first stage effluent, the second partial oxidation zone having at least one other burner adapted to partially oxidate at least a portion of a second stage feed of the hydrocarbon fuel or an other feed of an other fuel with at least a portion of a second stream of the oxidant or an other oxidant in the second partial oxidation zone, thereby forming a second partially oxidated effluent;
a second catalytic zone containing a second catalyst and being in fluid communication with the second partial oxidation zone and adapted to receive at least a portion of the second partially oxidated effluent, which reacts in the second catalytic zone to form a product synthesis gas containing hydrogen and carbon monoxide;
a means for combining at least a portion of at least one flow of at least one moderator with at least a portion of at least one of
a) the first stage feed of the hydrocarbon fuel,
b) the second stage feed of the hydrocarbon fuel or the other feed of the other fuel,
c) the first stream of the oxidant, and
d) the second stream of the oxidant or the other oxidant,
wherein the at least one moderator is selected from the group consisting of steam, carbon dioxide, and mixtures thereof;
at least one protective monolith between at least one of
a) the first partial oxidation zone and the first catalytic zone, and
b) the second partial oxidation zone and the second catalytic zone,
wherein at least one of the first catalyst and the second catalyst is monolithic, and
wherein the apparatus has a longitudinal axis through each of the first partial oxidation zone, the first catalytic zone, the second partial oxidation zone, and the second catalytic zone, and wherein the longitudinal axis is substantially horizontal, and
wherein at least one of the oxidant and the other oxidant is selected from a group consisting of oxygen, air, oxygen-depleted air, oxygen-enriched air, carbon dioxide, steam, and methanol.

14. A method for reforming a fuel, comprising the steps of:
providing a first stage feed of the fuel;
providing a second stage feed of the fuel or an other feed of an other fuel;
providing a first partial oxidation zone having at least one burner;
partially oxidating at least a portion of the first stage feed of the fuel with at least a portion of a first stream of an oxidant in the first partial oxidation zone with the at least one burner, thereby forming a first partially oxidated effluent;
providing a first catalytic zone containing a first catalyst and being in fluid communication with the first partial oxidation zone;
receiving in the first catalytic zone at least a portion of the first partially oxidated effluent, which reacts in the first catalytic zone to form a first stage effluent;
providing a second partial oxidation zone in fluid communication with the first catalytic zone, the second partial oxidation zone having at least one other burner;
receiving in the second partial oxidation zone at least a portion of the first stage effluent;
partially oxidating at least a portion of the second stage feed of the fuel or the other feed of the other fuel with at least a portion of a second stream of the oxidant or an other oxidant in the second partial oxidation zone, thereby forming a second partially oxidated effluent;
providing a second catalytic zone containing a second catalyst and being in fluid communication with the second partial oxidation zone; and
receiving in the second catalytic zone at least a portion of the second partially oxidated effluent, which reacts in the second catalytic zone to form a second stage effluent.

15. The method of claim 14, comprising the further steps of:
providing at least one flow of at least one moderator; and
combining at least a portion of the at least one flow of the at least one moderator with at least a portion of at least one of
a) the first stage feed of the fuel,
b) the second stage feed of the fuel or the other feed of the other fuel,
c) the first stream of the oxidant, and
d) the second stream of the oxidant or the other oxidant.

16. The method of claim 15, wherein the at least one moderator is selected from the group consisting of steam, carbon dioxide, and mixtures thereof.

17. The method of claim 14, comprising the further step of:
providing at least one protective monolith between at least one of
a) the first partial oxidation zone and the first catalytic zone, and
b) the second partial oxidation zone and the second catalytic zone.

18. The method of claim 14, wherein at least one of the first catalyst and the second catalyst is monolithic.

19. The method of claim 14, wherein there is a longitudinal axis through each of the first partial oxidation zone, the first catalytic zone, the second partial oxidation zone, and the second catalytic zone, and wherein the longitudinal axis is substantially horizontal.

20. The method of claim 14, wherein at least one of the first catalytic zone and the second catalytic zone is in fluid communication with a heat recovery device.

21. The method of claim 14, wherein the fuel is at least in part a hydrocarbon.

22. The method of claim 14, wherein at least one of the oxidant and the other oxidant is selected from a group consisting of oxygen, air, oxygen-depleted air, oxygen-enriched air, carbon dioxide, steam, and methanol.

23. The method of claim 14, wherein the second stage effluent is a product synthesis gas containing hydrogen and carbon monoxide.

24. The method of claim 14, wherein at least one of the first catalyst and the second catalyst is a steam reforming catalyst.

25. The method of claim 14, wherein at least one of a steam methane reforming reaction and a water gas shift reaction occurs in at least one of the first catalytic zone and the second catalytic zone.

26. The method of claim 14 for reforming a hydrocarbon fuel, comprising the steps of:
providing a first stage feed of the hydrocarbon fuel;
providing a second stage feed of the hydrocarbon fuel or an other feed of an other fuel;
providing a first partial oxidation zone having at least one burner;
partially oxidating at least a portion of the first stage feed of the hydrocarbon fuel with at least a portion of a first stream of an oxidant in the first partial oxidation zone with the at least one burner, thereby forming a first partially oxidated effluent;
providing a first catalytic zone containing a first catalyst and being in fluid communication with the first partial oxidation zone;
receiving in the first catalytic zone at least a portion of the first partially oxidated effluent, which reacts in the first catalytic zone to form a first stage effluent;
providing a second partial oxidation zone in fluid communication with the first catalytic zone, the second partial oxidation zone having at least one other burner;
receiving in the second partial oxidation zone at least a portion of the first stage effluent;
partially oxidating at least a portion of the second stage feed of the hydrocarbon fuel or the other feed of the other fuel with at least a portion of a second stream of the oxidant or an other oxidant in the second partial oxidation zone, thereby forming a second partially oxidated effluent;
providing a second catalytic zone containing a second catalyst and being in fluid communication with the second partial oxidation zone;
receiving in the second catalytic zone at least a portion of the second partially oxidated effluent, which reacts in the second catalytic zone to form a product synthesis gas containing hydrogen and carbon monoxide;
providing at least one flow of at least one moderator;
combining at least a portion of the at least one flow of the at least one moderator with at least a portion of at least one of
a) the first stage feed of the fuel,
b) the second stage feed of the fuel or the other feed of the other fuel,
c) the first stream of the oxidant, and
d) the second stream of the oxidant or the other oxidant, wherein the at least one moderator is selected from the group consisting of steam, carbon dioxide, and mixtures thereof;
providing at least one protective monolith between at least one of
a) the first partial oxidation zone and the first catalytic zone, and
b) the second partial oxidation zone and the second catalytic zone,
wherein at least one of the first catalyst and the second catalyst is monolithic, and
wherein the apparatus has a longitudinal axis through each of the first partial oxidation zone, the first catalytic zone, the second partial oxidation zone, and the second catalytic zone, and wherein the longitudinal axis is substantially horizontal, and
wherein at least one of the oxidant and the other oxidant is selected from a group consisting of oxygen, air, oxygen-depleted air, oxygen-enriched air, carbon dioxide, steam, and methanol.

## Patentansprüche

1. Eine Vorrichtung zur Reformierung eines Brennstoffes, umfassend:
eine erste Partialoxidationszone mit mindestens einem Brenner, angepasst zur Partialoxidation von mindestens einem Teil einer Zufuhr einer ersten Stufe des Brennstoffes mit mindestens einem Teil eines ersten Stroms eines Oxidationsmittels in der ersten Partialoxidationszone, wobei ein erster partialoxidierter Abfluss gebildet wird;
eine erste katalytische Zone, welche einen ersten Katalysator enthält und in Fluidkommunikation mit der ersten Partialoxidationszone steht und angepasst ist,
mindestens einen Teil des ersten partialoxidierten Abflusses aufzunehmen, welcher sich in der ersten katalytischen Zone umsetzt, wobei ein Abfluss einer ersten Stufe gebildet wird;
eine zweite Partialoxidationszone in Fluidkommunikation mit der ersten katalytischen Zone und angepasst, mindestens einen Teil des Abflusses einer ersten Stufe aufzunehmen, wobei die zweite Partialoxidationszone mindestens einen anderen Brenner aufweist, angepasst, mindestens einen Teil einer Zufuhr einer zweiten Stufe des Brennstoffes oder einer anderen Zufuhr eines anderen Brennstoffes mit mindestens einem Teil eines zweiten Stroms des Oxidationsmittels oder eines anderen Oxidationsmittels in der zweiten Partialoxidationszone partial zu oxidieren, wobei ein zweiter partialoxidierter Abfluss gebildet wird; und
eine zweite katalytische Zone, welche einen zweiten Katalysator enthält und in Fluidkommunikation mit der zweiten Partialoxidationszone steht und angepasst ist, mindestens einen Teil des zweiten partialoxidierten Abflusses aufzunehmen, welcher sich in der zweiten katalytischen Zone umsetzt, wobei ein Abfluss einer zweiten Stufe gebildet wird.

2. Die Vorrichtung nach Anspruch 1, ferner umfassend:
ein Mittel zum Kombinieren von mindestens einem Teil von mindestens einem Fluss von mindestens einem Moderator mit mindestens einem Teil von mindestens einem von
a) der Zufuhr einer ersten Stufe des Brennstoffes,
b) der Zufuhr einer zweiten Stufe des Brennstoffes oder der anderen Zufuhr des anderen Brennstoffes,
c) dem ersten Strom des Oxidationsmittels, und
d) dem zweiten Strom des Oxidationsmittels oder des anderen Oxidationsmittels.

3. Die Vorrichtung nach Anspruch 2, wobei der mindestens eine Moderator aus der Gruppe ausgewählt ist, welche aus Dampf, Kohlendioxid und Gemischen davon besteht.

4. Die Vorrichtung nach Anspruch 1, ferner umfassend mindestens einen schützenden Monolith zwischen mindestens einer von
a) der ersten Partialoxidationszone und der ersten katalytischen Zone, und
b) der zweiten Partialoxidationszone und der zweiten katalytischen Zone.

5. Die Vorrichtung nach Anspruch 1, wobei mindestens einer von dem ersten Katalysator und dem zweiten Katalysator monolithisch ist.

6. Die Vorrichtung nach Anspruch 1, wobei die Vorrichtung eine Längsachse durch jede von der ersten Partialoxidationszone, der ersten katalytischen Zone, der zweiten Partialoxidationszone und der zweiten katalytischen Zone aufweist und wobei die Längsachse im Wesentlichen horizontal verläuft.

7. Die Vorrichtung nach Anspruch 1, wobei mindestens eine der ersten katalytischen Zone und der zweiten katalytischen Zone in Fluidkommunikation mit einer Wärmerückgewinnungsvorrichtung steht.

8. Die Vorrichtung nach Anspruch 1, wobei der Brennstoff mindestens teilweise ein Kohlenwasserstoff ist.

9. Die Vorrichtung nach Anspruch 1, wobei mindestens eines von dem Oxidationsmittel und dem anderen Oxidationsmittel aus der Gruppe ausgewählt ist, welche aus Sauerstoff, Luft, Sauerstoff-verarmter Luft, Sauerstoff-angereicherter Luft, Kohlendioxid, Dampf und Methanol besteht.

10. Die Vorrichtung nach Anspruch 1, wobei der Abfluss einer zweiten Stufe ein Synthesegasprodukt, welches Wasserstoff und Kohlenmonoxid enthält, ist.

11. Die Vorrichtung nach Anspruch 1, wobei mindestens einer von dem ersten Katalysator und dem zweiten Katalysator ein Dampfreformierungskatalysator ist.

12. Die Vorrichtung nach Anspruch 1, wobei mindestens eine von einer Dampf-Methan-Reformierungsreaktion und einer Wassergas-Shiftreaktion in mindestens einer der ersten katalytischen Zone und der zweiten katalytischen Zone stattfindet.

13. Die Vorrichtung nach Anspruch 1 zur Reformierung eines Kohlenwasserstoffbrennstoffes, umfassend:
eine erste Partialoxidationszone mit mindestens einem Brenner, angepasst zur Partialoxidation von mindestens einem Teil einer Zufuhr einer ersten Stufe des KohlenwasserstoffBrennstoffes mit mindestens einem Teil eines ersten Stroms eines Oxidationsmittels in der ersten Partialoxidationszone, wobei ein erster partialoxidierter Abfluss gebildet wird;
eine erste katalytische Zone, welche einen ersten Katalysator enthält und in Fluidkommunikation mit der ersten Partialoxidationszone steht und angepasst ist, mindestens einen Teil des ersten partialoxidierten Abflusses aufzunehmen, welcher sich in der ersten katalytischen Zone umsetzt, wobei ein Abfluss einer ersten Stufe gebildet wird;
eine zweite Partialoxidationszone in Fluidkommunikation mit der ersten katalytischen Zone und angepasst, mindestens einen Teil des Abflusses einer ersten Stufe aufzunehmen, wobei die zweite Partialoxidationszone mindestens einen anderen Brenner aufweist, angepasst, mindestens einen Teil einer Zufuhr einer zweiten Stufe des Kohlenwasserstoffbrennstoffes oder einer anderen Zufuhr eines anderen Brennstoffes mit mindestens einem Teil eines zweiten Stroms des Oxidationsmittels oder eines anderen Oxidationsmittels in der zweiten Partialoxidationszone partial zu oxidieren, wobei ein zweiter partialoxidierter Abfluss gebildet wird; und
eine zweite katalytische Zone, welche einen zweiten Katalysator enthält und in Fluidkommunikation mit der zweiten Partialoxidationszone steht und angepasst ist, mindestens einen Teil des zweiten partialoxidierten Abflusses aufzunehmen, welcher sich in der zweiten katalytischen Zone umsetzt, wobei ein Synthesegasprodukt, welches Wasserstoff und Kohlenmonoxid enthält, gebildet wird;
ein Mittel zum Kombinieren von mindestens einem Teil von mindestens einem Fluss von mindestens einem Moderator mit mindestens einem Teil von mindestens einem von
a) der Zufuhr einer ersten Stufe des Kohlenwasserstoffbrennstoffes,
b) der Zufuhr einer zweiten Stufe des Kohlenwasserstoffbrennstoffes oder der anderen Zufuhr des anderen Brennstoffes,
c) dem ersten Strom des Oxidationsmittels, und
d) dem zweiten Strom des Oxidationsmittels oder des anderen Oxidationsmittels, wobei der mindestens eine Moderator aus der Gruppe ausgewählt ist, welche aus Dampf, Kohlendioxid und Gemischen davon, besteht;
mindestens einen schützenden Monolith zwischen mindestens einer von
a) der ersten Partialoxidationszone und der ersten katalytischen Zone, und
b) der zweiten Partialoxidationszone und der zweiten katalytischen Zone, wobei mindestens einer von dem ersten Katalysator und dem zweiten Katalysator monolithisch ist, und
wobei die Vorrichtung eine Längsachse durch jede von der ersten Partialoxidationszone, der ersten katalytischen Zone, der zweiten Partialoxidationszone und der zweiten katalytischen Zone aufweist und wobei die Längsachse im Wesentlichen horizontal verläuft, und
wobei mindestens eines von dem Oxidationsmittel und dem anderen Oxidationsmittel aus der Gruppe ausgewählt ist, welche aus Sauerstoff, Luft, Sauerstoff-verarmter Luft, Sauerstoff-angereicherter Luft, Kohlendioxid, Dampf und Methanol, besteht.

14. Ein Verfahren zur Reformierung eines Brennstoffes, umfassend die Schritte von:
Bereitstellen einer Zufuhr einer ersten Stufe des Brennstoffes;
Bereitstellen einer Zufuhr einer zweiten Stufe des Brennstoffes oder einer anderen Zufuhr eines anderen Brennstoffes;
Bereitstellen einer ersten Partialoxidationszone mit mindestens einem Brenner;
Partialoxidieren von mindestens einem Teil der Zufuhr einer ersten Stufe des Brennstoffes mit mindestens einem Teil eines ersten Stroms eines Oxidationsmittels in der ersten Partialoxidationszone mit dem mindestens einen Brenner, wobei ein erster partialoxidierter Abfluss gebildet wird;
Bereitstellen einer ersten katalytischen Zone, welche einen ersten Katalysator enthält und in Fluidkommunikation mit der ersten Partialoxidationszone steht;
Aufnehmen in der ersten katalytischen Zone von mindestens einem Teil des ersten partialoxidierten Abflusses, welcher sich in der ersten katalytischen Zone umsetzt, wobei ein Abfluss einer ersten Stufe gebildet wird;
Bereitstellen einer zweiten Partialoxidationszone in Fluidkommunikation mit der ersten katalytischen Zone, wobei die zweite Partialoxidationszone mindestens einen anderen Brenner aufweist;
Aufnehmen in der zweiten Partialoxidationszone von mindestens einem Teil des Abflusses einer ersten Stufe;
Partialoxidieren von mindestens einem Teil der Zufuhr einer zweiten Stufe des Brennstoffes oder der anderen Zufuhr des anderen Brennstoffes mit mindestens einem Teil eines zweiten Stroms des Oxidationsmittels oder eines anderen Oxidationsmittels in der zweiten Partialoxidationszone, wobei ein zweiter partialoxidierter Abfluss gebildet wird;
Bereitstellen einer zweiten katalytischen Zone, welche einen zweiten Katalysator enthält und in Fluidkommunikation mit der zweiten Partialoxidationszone steht; und
Aufnehmen in der zweiten katalytischen Zone von mindestens einem Teil des zweiten partialoxidierten Abflusses, welcher sich in der zweiten katalytischen Zone umsetzt, wobei ein Abfluss einer zweiten Stufe gebildet wird.

15. Das Verfahren nach Anspruch 14, umfassend die weiteren Schritte von:
Bereitstellen von mindestens einem Fluss von mindestens einem Moderator; und
Kombinieren von mindestens einem Teil des mindestens einen Flusses des mindestens einen Moderators mit mindestens einem Teil von mindestens einem von
a) der Zufuhr einer ersten Stufe des Brennstoffes,
b) der Zufuhr einer zweiten Stufe des Brennstoffes oder der anderen Zufuhr des anderen Brennstoffes,
c) dem ersten Strom des Oxidationsmittels, und
d) dem zweiten Strom des Oxidationsmittels oder des anderen Oxidationsmittels.

16. Das Verfahren nach Anspruch 15, wobei der mindestens eine Moderator aus der Gruppe ausgewählt ist, welche aus Dampf, Kohlendioxid und Gemischen davon, besteht.

17. Das Verfahren nach Anspruch 14, umfassend den weiteren Schritt von:
Bereitstellen von mindestens einem schützenden Monolith zwischen mindestens einer von
a) der ersten Partialoxidationszone und der ersten katalytischen Zone, und
b) der zweiten Partialoxidationszone und der zweiten katalytischen Zone.

18. Das Verfahren nach Anspruch 14, wobei mindestens einer von dem ersten Katalysator und dem zweiten Katalysator monolithisch ist.

19. Das Verfahren nach Anspruch 14, wobei eine Längsachse durch jede von der ersten Partialoxidationszone, der ersten katalytischen Zone, der zweiten Partialoxidationszone und der zweiten katalytischen Zone verläuft und wobei die Längsachse im Wesentlichen horizontal verläuft.

20. Das Verfahren nach Anspruch 14, wobei mindestens eine von der ersten katalytischen Zone und der zweiten katalytischen Zone in Fluidkommunikation mit einer Wärmerückgewinnungsvorrichtung steht.

21. Das Verfahren nach Anspruch 14, wobei der Brennstoff mindestens teilweise ein Kohlenwasserstoff ist.

22. Das Verfahren nach Anspruch 14, wobei mindestens eines von dem Oxidationsmittel und dem anderen Oxidationsmittel aus einer Gruppe ausgewählt ist, welche aus Sauerstoff, Luft, Sauerstoff-verarmter Luft, Sauerstoff-angereicherter Luft, Kohlendioxid, Dampf und Methanol, besteht.

23. Das Verfahren nach Anspruch 14, wobei der Abfluss einer zweiten Stufe ein Synthesegasprodukt, welches Wasserstoff und Kohlenmonoxid enthält, ist.

24. Das Verfahren nach Anspruch 14, wobei mindestens einer von dem ersten Katalysator und dem zweiten Katalysator ein Dampfreformierungskatalysator ist.

25. Das Verfahren nach Anspruch 14, wobei mindestens eine von einer Dampf-Methan-Reformierungsreaktion und einer Wassergas-Shiftreaktion in mindestens einer von der ersten katalytischen Zone und der zweiten katalytischen Zone stattfindet.

26. Das Verfahren nach Anspruch 14 zur Reformierung eines Kohlenwasserstoffbrennstoffes, umfassend die Schritte von:
Bereitstellen einer Zufuhr einer ersten Stufe des Kohlenwasserstoffbrennstoffes;
Bereitstellen einer Zufuhr einer zweiten Stufe des Kohlenwasserstoffbrennstoffes oder einer anderen Zufuhr eines anderen Brennstoffes;
Bereitstellen einer ersten Partialoxidationszone mit mindestens einem Brenner;
Partialoxidieren von mindestens einem Teil der Zufuhr einer ersten Stufe des KohlenwasserstoffBrennstoffes mit mindestens einem Teil eines ersten Stroms eines Oxidationsmittels in der ersten Partialoxidationszone mit dem mindestens einen Brenner, wobei ein erster partialoxidierter Abfluss gebildet wird;
Bereitstellen einer ersten katalytischen Zone, welche einen ersten Katalysator enthält und in Fluidkommunikation mit der ersten Partialoxidationszone steht;
Aufnehmen in der ersten katalytischen Zone von mindestens einem Teil des ersten partialoxidierten Abflusses, welcher sich in der ersten katalytischen Zone umsetzt, wobei ein Abfluss einer ersten Stufe gebildet wird;
Bereitstellen einer zweiten Partialoxidationszone in Fluidkommunikation mit der ersten katalytischen Zone, wobei die zweite Partialoxidationszone mindestens einen anderen Brenner aufweist;
Aufnehmen in der zweiten Partialoxidationszone von mindestens einem Teil des Abflusses einer ersten Stufe;
Partialoxidieren von mindestens einem Teil der Zufuhr einer zweiten Stufe des Kohlenwasserstoffbrennstoffes oder der anderen Zufuhr des anderen Brennstoffes mit mindestens einem Teil eines zweiten Stroms des Oxidationsmittels oder eines anderen Oxidationsmittels in der zweiten Partialoxidationszone, wobei ein zweiter partialoxidierter Abfluss gebildet wird;
Bereitstellen einer zweiten katalytischen Zone, welche einen zweiten Katalysator enthält und in Fluidkommunikation mit der zweiten Partialoxidationszone steht;
Aufnehmen in der zweiten katalytischen Zone von mindestens einem Teil des zweiten partialoxidierten Abflusses, welcher sich in der zweiten katalytischen Zone umsetzt, wobei ein Synthesegasprodukt, welches Wasserstoff und Kohlenmonoxid enthält, gebildet wird;
Bereitstellen von mindestens einem Fluss von mindestens einem Moderator;
Kombinieren von mindestens einem Teil des mindestens einen Flusses des mindestens einen Moderators mit mindestens einem Teil von mindestens einem von
a) der Zufuhr einer ersten Stufe des Brennstoffes,
b) der Zufuhr einer zweiten Stufe des Brennstoffes oder der anderen Zufuhr des anderen Brennstoffes,
c) dem ersten Strom des Oxidationsmittels, und
d) dem zweiten Strom des Oxidationsmittels oder des anderen Oxidationsmittels, wobei der mindestens eine Moderator aus der Gruppe ausgewählt ist, welche aus Dampf, Kohlendioxid und Gemischen davon, besteht;
Bereitstellen von mindestens einem schützenden Monolith zwischen mindestens einer von
a) der ersten Partialoxidationszone und der ersten katalytischen Zone, und
b) der zweiten Partialoxidationszone und der zweiten katalytischen Zone,
wobei mindestens einer von dem ersten Katalysator und dem zweiten Katalysator monolithisch ist, und
wobei die Vorrichtung eine Längsachse durch jede von der ersten Partialoxidationszone, der ersten katalytischen Zone, der zweiten Partialoxidationszone und der zweiten katalytischen Zone aufweist und wobei die Längsachse im Wesentlichen horizontal verläuft, und
wobei mindestens eines von dem Oxidationsmittel und dem anderen Oxidationsmittel aus der Gruppe ausgewählt ist, welche aus Sauerstoff, Luft, Sauerstoff-verarmter Luft, Sauerstoff-angereicherter Luft, Kohlendioxid, Dampf und Methanol, besteht.

## Revendications

1. Appareil de reformage d'un combustible, comprenant :
une première zone d'oxydation partielle ayant au moins un brûleur adapté pour oxyder partiellement au moins une partie d'une charge de première étape du combustible avec au moins une partie d'un premier courant d'un oxydant dans la première zone d'oxydation partielle, en formant ainsi un premier effluent partiellement oxydé ;
une première zone catalytique contenant un premier catalyseur et étant en communication fluide avec la première zone d'oxydation partielle et adaptée pour recevoir au moins une partie du premier effluent partiellement oxydé, qui réagit dans la première zone catalytique pour former un effluent de première étape ;
une deuxième zone d'oxydation partielle en communication fluide avec la première zone catalytique et adaptée pour recevoir au moins une partie de l'effluent de première étape, la deuxième zone d'oxydation partielle ayant au moins un autre brûleur adapté pour oxyder partiellement au moins une partie d'une charge de deuxième étape du combustible ou d'une autre charge d'un autre combustible avec au moins une partie d'un deuxième courant de l'oxydant ou d'un autre oxydant dans la deuxième zone d'oxydation partielle, en formant ainsi un deuxième effluent partiellement oxydé ; et
une deuxième zone catalytique contenant un deuxième catalyseur et étant en communication fluide avec la deuxième zone d'oxydation partielle et adaptée pour recevoir au moins une partie du deuxième effluent partiellement oxydé, qui réagit dans la deuxième zone catalytique pour former un effluent de deuxième étape.

2. Appareil selon la revendication 1, comprenant en outre :
des moyens pour combiner au moins une partie d'au moins un écoulement d'au moins un modérateur avec au moins une partie d'au moins l'un de
a) la charge de première étape du combustible,
b) la charge de deuxième étape du combustible ou l'autre charge de l'autre combustible,
c) le premier courant de l'oxydant, et
d) le deuxième courant de l'oxydant ou l'autre oxydant.

3. Appareil selon la revendication 2, dans lequel le au moins un modérateur est choisi dans le groupe constitué par la vapeur, le dioxyde de carbone et leurs mélanges.

4. Appareil selon la revendication 1, comprenant en outre au moins un monolithe protecteur entre au moins l'une de
a) la première zone d'oxydation partielle et la première zone catalytique, et
b) la deuxième zone d'oxydation partielle et la deuxième zone catalytique.

5. Appareil selon la revendication 1, dans lequel au moins l'un du premier catalyseur et du deuxième catalyseur est monolithique.

6. Appareil selon la revendication 1, dans lequel l'appareil présente un axe longitudinal traversant chacune de la première zone d'oxydation partielle, la première zone catalytique, la deuxième zone d'oxydation partielle et la deuxième zone catalytique, et dans lequel l'axe longitudinal est sensiblement horizontal.

7. Appareil selon la revendication 1, dans lequel au moins l'une de la première zone catalytique et de la deuxième zone catalytique est en communication fluide avec un récupérateur de chaleur.

8. Appareil selon la revendication 1, dans lequel le combustible est au moins en partie un hydrocarbure.

9. Appareil selon la revendication 1, dans lequel au moins l'un de l'oxydant et de l'autre oxydant est choisi dans le groupe constitué par l'oxygène, l'air, l'air appauvri en oxygène, l'air enrichi en oxygène, le dioxyde de carbone, la vapeur et le méthanol.

10. Appareil selon la revendication 1, dans lequel l'effluent de deuxième étape est un gaz de synthèse contenant de l'hydrogène et du monoxyde de carbone.

11. Appareil selon la revendication 1, dans lequel au moins l'un du premier catalyseur et du deuxième catalyseur est un catalyseur de reformage à la vapeur.

12. Appareil selon la revendication 1, dans lequel au moins l'une d'une réaction de vaporeformage du méthane et d'une réaction du gaz à l'eau a lieu dans au moins l'une de la première zone catalytique et de la deuxième zone catalytique.

13. Appareil selon la revendication 1 pour le reformage d'un combustible hydrocarboné, comprenant :
une première zone d'oxydation partielle ayant au moins un brûleur adapté pour oxyder partiellement au moins une partie d'une charge de première étape du combustible hydrocarboné avec au moins une partie d'un premier courant d'un oxydant dans la première zone d'oxydation partielle, en formant ainsi un premier effluent partiellement oxydé ;
une première zone catalytique contenant un premier catalyseur et étant en communication fluide avec la première zone d'oxydation partielle et adaptée pour recevoir au moins une partie du premier effluent partiellement oxydé, qui réagit dans la première zone catalytique pour former un effluent de première étape ;
une deuxième zone d'oxydation partielle en communication fluide avec la première zone catalytique et adaptée pour recevoir au moins une partie de l'effluent de première étape, la deuxième zone d'oxydation partielle ayant au moins un autre brûleur adapté pour oxyder partiellement au moins une partie d'une charge de deuxième étape du combustible hydrocarboné ou d'une autre charge d'un autre combustible avec au moins une partie d'un deuxième courant de l'oxydant ou d'un autre oxydant dans la deuxième zone d'oxydation partielle, en formant ainsi un deuxième effluent partiellement oxydé ;
une deuxième zone catalytique contenant un deuxième catalyseur et étant en communication fluide avec la deuxième zone d'oxydation partielle et adaptée pour recevoir au moins une partie du deuxième effluent partiellement oxydé, qui réagit dans la deuxième zone catalytique pour former un gaz de synthèse contenant de l'hydrogène et du monoxyde de carbone ;
des moyens pour combiner au moins une partie d'au moins un écoulement d'au moins un modérateur avec au moins une partie d'au moins l'un de
a) la charge de première étape du combustible hydrocarboné,
b) la charge de deuxième étape du combustible hydrocarboné ou l'autre charge de l'autre combustible,
c) le premier courant de l'oxydant, et
d) le deuxième courant de l'oxydant ou l'autre oxydant, dans lequel le au moins un modérateur est choisi dans le groupe constitué par la vapeur, le dioxyde de carbone et leurs mélanges ;
au moins un monolithe protecteur entre au moins l'une de
a) la première zone d'oxydation partielle et la première zone catalytique, et
b) la deuxième zone d'oxydation partielle et la deuxième zone catalytique,
dans lequel au moins l'un du premier catalyseur et du deuxième catalyseur est monolithique, et
dans lequel l'appareil présente un axe longitudinal traversant chacune de la première zone d'oxydation partielle, la première zone catalytique, la deuxième zone d'oxydation partielle et la deuxième zone catalytique, et dans lequel l'axe longitudinal est sensiblement horizontal, et
dans lequel au moins l'un de l'oxydant et de l'autre oxydant est choisi dans le groupe constitué par l'oxygène, l'air, l'air appauvri en oxygène, l'air enrichi en oxygène, le dioxyde de carbone, la vapeur et le méthanol.

14. Procédé de reformage d'un combustible, comprenant les étapes consistant à :
fournir une charge de première étape du combustible ;
fournir une charge de deuxième étape du combustible ou une autre charge d'un autre combustible ;
fournir une première zone d'oxydation partielle ayant au moins un brûleur ;
partiellement oxyder au moins une partie de la charge de première étape du combustible avec au moins une partie d'un premier courant d'un oxydant dans la première zone d'oxydation partielle avec le au moins un brûleur, en formant ainsi un premier effluent partiellement oxydé ;
fournir une première zone catalytique contenant un premier catalyseur et étant en communication fluide avec la première zone d'oxydation partielle ;
recevoir dans la première zone catalytique au moins une partie du premier effluent partiellement oxydé, qui réagit dans la première zone catalytique pour former un effluent de première étape ;
fournir une deuxième zone d'oxydation partielle en communication fluide avec la première zone catalytique, la deuxième zone d'oxydation partielle ayant au moins un autre brûleur ;
recevoir dans la deuxième zone d'oxydation partielle au moins une partie de l'effluent de première étape ;
partiellement oxyder au moins une partie de la charge de deuxième étape du combustible ou de l'autre charge de l'autre combustible avec au moins une partie d'un deuxième courant de l'oxydant ou d'un autre oxydant dans la deuxième zone d'oxydation partielle, en formant ainsi un deuxième effluent partiellement oxydé ;
fournir une deuxième zone catalytique contenant un deuxième catalyseur et étant en communication fluide avec la deuxième zone d'oxydation partielle ; et
recevoir dans la deuxième zone catalytique au moins une partie du deuxième effluent partiellement oxydé, qui réagit dans la deuxième zone catalytique pour former un effluent de deuxième étape.

15. Procédé selon la revendication 14, comprenant les étapes supplémentaires consistant à :
fournir au moins un écoulement d'au moins un modérateur ; et
combiner au moins une partie de l'au moins un écoulement de l'au moins un modérateur avec au moins une partie d'au moins l'un de
a) la charge de première étape du combustible,
b) la charge de deuxième étape du combustible ou l'autre charge de l'autre combustible,
c) le premier courant de l'oxydant, et
d) le deuxième courant de l'oxydant ou l'autre oxydant.

16. Procédé selon la revendication 15, dans lequel le au moins un modérateur est choisi dans le groupe constitué par la vapeur, le dioxyde de carbone et leurs mélanges.

17. Procédé selon la revendication 14, comprenant l'étape supplémentaire consistant à :
fournir au moins un monolithe protecteur entre au moins l'une de
a) la première zone d'oxydation partielle et la première zone catalytique, et
b) la deuxième zone d'oxydation partielle et la deuxième zone catalytique.

18. Procédé selon la revendication 14, dans lequel au moins l'un du premier catalyseur et du deuxième catalyseur est monolithique.

19. Procédé selon la revendication 14, dans lequel il existe un axe longitudinal traversant chacune de la première zone d'oxydation partielle, la première zone catalytique, la deuxième zone d'oxydation partielle et la deuxième zone catalytique, et dans lequel l'axe longitudinal est sensiblement horizontal.

20. Procédé selon la revendication 14, dans lequel au moins l'une de la première zone catalytique et de la deuxième zone catalytique est en communication fluide avec un récupérateur de chaleur.

21. Procédé selon la revendication 14, dans lequel le combustible est au moins en partie un hydrocarbure.

22. Procédé selon la revendication 14, dans lequel au moins l'un de l'oxydant et de l'autre oxydant est choisi dans le groupe constitué par l'oxygène, l'air, l'air appauvri en oxygène, l'air enrichi en oxygène, le dioxyde de carbone, la vapeur et le méthanol.

23. Procédé selon la revendication 14, dans lequel l'effluent de deuxième étape est un gaz de synthèse contenant de l'hydrogène et du monoxyde de carbone.

24. Procédé selon la revendication 14, dans lequel au moins l'un du premier catalyseur et du deuxième catalyseur est un catalyseur de reformage à la vapeur.

25. Procédé selon la revendication 14, dans lequel au moins l'une d'une réaction de vaporeformage du méthane et d'une réaction du gaz à l'eau a lieu dans au moins l'une de la première zone catalytique et de la deuxième zone catalytique.

26. Procédé selon la revendication 14 pour le reformage d'un combustible hydrocarboné, comprenant les étapes consistant à :
fournir une charge de première étape du combustible hydrocarboné ;
fournir une charge de deuxième étape du combustible hydrocarboné ou une autre charge d'un autre combustible ;
fournir une première zone d'oxydation partielle ayant au moins un brûleur ;
partiellement oxyder au moins une partie de la charge de première étape du combustible hydrocarboné avec au moins une partie d'un premier courant d'un oxydant dans la première zone d'oxydation partielle avec le au moins un brûleur, en formant ainsi un premier effluent partiellement oxydé ;
fournir une première zone catalytique contenant un premier catalyseur et étant en communication fluide avec la première zone d'oxydation partielle ;
recevoir dans la première zone catalytique au moins une partie du premier effluent partiellement oxydé, qui réagit dans la première zone catalytique pour former un effluent de première étape ;
fournir une deuxième zone d'oxydation partielle en communication fluide avec la première zone catalytique, la deuxième zone d'oxydation partielle ayant au moins un autre brûleur ;
recevoir dans la deuxième zone d'oxydation partielle au moins une partie de l'effluent de première étape ;
partiellement oxyder au moins une partie de la charge de deuxième étape du combustible hydrocarboné ou de l'autre charge de l'autre combustible avec au moins une partie d'un deuxième courant de l'oxydant ou d'un autre oxydant dans la deuxième zone d'oxydation partielle, en formant ainsi un deuxième effluent partiellement oxydé ;
fournir une deuxième zone catalytique contenant un deuxième catalyseur et étant en communication fluide avec la deuxième zone d'oxydation partielle ;
recevoir dans la deuxième zone catalytique au moins une partie du deuxième effluent partiellement oxydé, qui réagit dans la deuxième zone catalytique pour former un gaz de synthèse contenant de l'hydrogène et du monoxyde de carbone ;
fournir au moins un écoulement d'au moins un modérateur ;
combiner au moins une partie de l'au moins un écoulement de l'au moins un modérateur avec au moins une partie d'au moins l'un de
a) la charge de première étape du combustible,
b) la charge de deuxième étape du combustible ou l'autre charge de l'autre combustible,
c) le premier courant de l'oxydant, et
d) le deuxième courant de l'oxydant ou l'autre oxydant, dans lequel le au moins un modérateur est choisi dans le groupe constitué par la vapeur, le dioxyde de carbone et leurs mélanges ;
fournir au moins un monolithe protecteur entre au moins l'une de
a) la première zone d'oxydation partielle et la première zone catalytique, et
b) la deuxième zone d'oxydation partielle et la deuxième zone catalytique,
dans lequel au moins l'un du premier catalyseur et du deuxième catalyseur est monolithique, et
dans lequel l'appareil présente un axe longitudinal traversant chacune de la première zone d'oxydation partielle, la première zone catalytique, la deuxième zone d'oxydation partielle et la deuxième zone catalytique, et dans lequel l'axe longitudinal est sensiblement horizontal, et
dans lequel au moins l'un de l'oxydant et de l'autre oxydant est choisi dans le groupe constitué par l'oxygène, l'air, l'air appauvri en oxygène, l'air enrichi en oxygène, le dioxyde de carbone, la vapeur et le méthanol.
